# FASCICULE DE BREVET EUROPEEN

(11) **EP 3 131 738 B1**
(45) Date de publication et mention de la délivrance du brevet: **13.03.2019**
(21) Numéro de dépôt: 15727455.6
(22) Date de dépôt: 15.04.2015
(51) Int. Cl.: B29C 65/02, B29C 63/06, B29C 47/02, B29C 47/90

(54) **PROCÉDÉ ET DISPOSITIF D'EXTRUSION ET ÉTIQUETAGE D'UN TUBE D'EMBALLAGE**
VERFAHREN UND VORRICHTUNG ZUR HERSTELLUNG UND ETIKETTIERUNG EINES VERPACKUNGSSCHLAUCHS
PROCESS AND DEVICE FOR EXTRUDING AND LABELING A PACKAGING TUBE

(30) Priorité: 17.04.2014 EP 14165267; 11.06.2014 WO PCT/IB2014/062119
(43) Date de publication de la demande: 22.02.2017
(73) Titulaire: Aisapack Holding SA, 1896 Vouvry (CH)
(72) Inventeur: KELLER, Gerhard, 1896 Vouvry (CH); THOMASSET, Jacques, 1896 Vouvry (CH)
(74) Mandataire: Grosfillier, Philippe
(86) Numéro de dépôt international: PCT/IB2015/052746
(87) Numéro de publication internationale: WO 2015/159234

(56) Documents cités:
- DE-A1- 1 504 918
- DE-A1-102006 006 993
- FR-A- 1 311 341

## Description

### Domaine de l'invention

L'invention se situe dans le domaine des tubes ou cylindres, et plus particulièrement des tubes d'emballage pour produits liquides ou visqueux dont la jupe est obtenue par extrusion.

### Etat de la technique

Les tubes flexibles d'emballage présentent généralement deux parties distinctes, à savoir une jupe ou corps cylindrique flexible reliée à une tête comportant un goulot et fermé par un bouchon. La jupe du tube est obtenue soit par extrusion d'un corps tubulaire, soit par soudage d'une feuille multicouche.

Il existe plusieurs procédés pour ajouter la tête de tube sur l'extrémité d'une jupe préalablement extrudée. La tête de tube peut être moulée par compression ou injection et conjointement soudée sur la jupe par surmoulage. Un autre procédé consiste à pré-fabriquer la tête de tube par injection ou compression moulage, puis à assembler la tête de tube sur la jupe par soudage.

Le tube ainsi formé est ensuite décoré au niveau de la jupe. Dans certains cas, l'opération d'impression se fait avant l'assemblage de la jupe et de la tête de tube. Cette opération d'impression présente plusieurs inconvénients liés au fait que l'impression n'est pas réalisée à plat mais sur la géométrie tubulaire de la jupe. Cela conduit généralement à un procédé de plus grande complexité et par conséquent à un équipement onéreux ; à des cadences de production plus faibles, et à une flexibilité réduite. Le manque de flexibilité des machines d'impression conduit par exemple à des opérations de reprises pour des décorations complexes telles que la sérigraphie ou la décoration à chaud.

Afin de surmonter les difficultés de décoration, une méthode consiste à appliquer une étiquette adhésive pré-imprimée. L'étiquette qui est associée à un film support généralement en PET est séparée du support lors de l'application sur la surface externe du tube. L'étiquette est pré-enduite avec un adhésif collant qui lie l'étiquette à la surface du tube. La couche adhésive est protégée par le film support avant l'application de l'étiquette sur le tube.

Le procédé divulgué dans la demande de brevet WO2007/092652 consiste à appliquer une fine étiquette qui n'est pas encollée sur un film support avant utilisation. Selon cette méthode, l'opération d'enduction ou d'activation de la couche adhésive a lieu au moment de l'application de l'étiquette sur la surface du tube. Une variante de ce procédé consiste à appliquer la couche adhésive sur l'étiquette au moment de l'application. Une autre variante consiste à appliquer la couche adhésive sur la surface du tube avant application de l'étiquette. Le procédé décrit dans WO 2007/082652 présente cependant plusieurs inconvénients. L'ajout par enduction d'une couche adhésive au moment de l'application de l'étiquette ou l'ajout d'une étape d'activation rend plus complexe le procédé de fabrication, en particulier lors de l'application sur une ligne d'extrusion de tube en continu (figure 2 de WO2007092652). Un autre inconvénient réside dans les temps d'activation très courts de la couche adhésive que requiert cette méthode ce qui peut conduire à un choix restreint et coûteux d'adhésifs. Un autre inconvénient se situe au niveau de l'emballage : L'étiquette qui est ajoutée sur la surface du tube ne fait pas partie intégrante de la paroi de l'emballage. Les bords de l'étiquette sont parfois visibles ou détectables par le toucher et nuisent aux propriétés de décoration et esthétique de l'emballage.

La demande de brevet EP 0 457 561 A2 présente une méthode et un dispositif pour la confection de corps tubulaires extrudés ayant un film laminé en surface. Cette méthode consiste former un premier corps tubulaire à partir d'un film, à extruder un liner à l'intérieur dudit corps tubulaire, à étirer le liner radialement, à mettre en pression le liner contre le corps tubulaire. Cette méthode présente plusieurs inconvénients. Un premier inconvénient est lié au fait que le liner doit être extrudé à l'intérieur du corps tubulaire formé par le film. Cette opération requiert un diamètre de tube suffisamment grand pour placer dans le tube les outillages nécessaires à l'extrusion et étirage radial du liner du liner extrudé. La méthode proposée dans cette antériorité ne permet pas la réalisation de tubes de petit diamètre et en particulier de tubes de diamètre inférieur à 35mm. EP 0 457 561 A2 propose également un calibrage interne du diamètre du tube. Outre les notions d'encombrement citées précédemment, cette méthode présente l'inconvénient de générer de faibles variations du diamètre extérieur du tube. Ces variations qui dépendent de la régularité du débit de l'extrudeuse peuvent engendrer des défauts de décoration. En effet, pour obtenir une décoration de haute qualité, les extrémités du film décor qui se trouve en surface externe du corps tubulaire doivent être ajustées bout à bout. Or, les variations de débit d'extrusion citées précédemment ont pour effet de faire varier le diamètre extérieur du corps tubulaire, donc d'écarter ou rapprocher les extrémités du film décor. Ces variations engendrent des défauts visuels au niveau de la jonction des extrémités du film décor.

Des inconvénients similaires sont constatés dans les procédés et dispositifs décrits dans les demandes de brevet DE 1 504 918 et DE 10 2006 006 993.

Il existe donc un besoin de remédier aux inconvénients précités.

### Définitions

Dans présent texte le terme « étiquetage » se réfère à la fixation d'un film, également nommé « film décor » ou « étiquette », sur un tube.

Le terme « décor » se réfère à un élément visuel à caractère informatif et/ou esthétique.

### Exposé général de l'invention

L'invention concerne un procédé, un dispositif et un tube tels que définis dans les revendications.

L'invention permet la décoration de jupes de tube extrudés grâce à un procédé économique et flexible. Elle consiste associer des opérations d'extrusion à des opérations d'étiquetage afin d'aboutir à un corps tubulaire décoré. L'étiquette peut être constituée d'un film décor monocouche ou multicouche. Le film décor est intégré à l'emballage lors de l'extrusion à l'état fondu du corps tubulaire, de telle sorte que la surface extérieure de l'emballage décoré forme une surface continue sans aspérité. Grâce au procédé selon l'invention le film décor fait partie intégrante de l'emballage contrairement à une étiquette usuelle qui serait ajoutée sur un emballage déjà formé.

De préférence, le film décor qui forme tout ou partie de la surface externe du corps tubulaire est soudé au corps tubulaire grâce à la chaleur de la résine extrudée. Selon un mode de réalisation, le film décor entre en contact avec l'extrudât fondu avant la phase de refroidissement, avant l'étape de calibration.

Le procédé selon l'invention résulte de l'association d'un procédé d'extrusion et d'un procédé d'étiquetage. Le procédé consiste à mettre en contact l'étiquette autour du corps tubulaire à l'état fondu, de préférence après l'opération de conformation du film en géométrie tubulaire. Avantageusement, on calibre et refroidit la structure tubulaire multicouche résultante afin d'obtenir un tube extrudé décoré.

Selon un mode préférentiel de réalisation de l'invention le procédé comporte une première étape de conformation du film en géométrie partiellement ou totalement tubulaire, suivie d'une deuxième étape d'extrusion d'un corps tubulaire à l'état fondu ; puis d'une troisième étape consistant à mettre en contact la surface externe du corps tubulaire à l'état fondu contre la surface interne (concave) de l'étiquette et enfin d'une quatrième étape de calibration consistant à appliquer la surface externe de l'étiquette destinée à former la surface externe du tube contre la surface interne du calibre. La troisième étape est réalisée par une différence de pression entre les surfaces interne et externe du corps tubulaire. La quatrième étape est réalisée par une différence de pression entre la surface interne et la surface externe du tube.

Le procédé selon l'invention consiste à fabriquer un corps tubulaire extrudé ayant une étiquette film décor qui, dans un mode préférentiel, compose toute sa surface externe. Dans ce mode préférentiel le corps tubulaire est totalement enveloppé dans l'étiquette lors de son passage dans le calibre et les bacs de refroidissement successifs. La matière fondue n'est pas en frottement sur les outillages refroidis, ce qui permet d'améliorer l'esthétique des emballages produits, leur résistance aux impacts et au stress cracking.

Selon une variante de l'invention, une première différence de pression est utilisée pour mettre en contact le corps tubulaire et l'étiquette. Cette première différence de pression s'exerce au moins entre la sortie de l'extrudât du bec de l'outillage et la zone de contact entre la surface interne du film et la surface externe de l'extrudât. Cette première différence de pression permet d'éviter l'emprisonnement de bulles d'air entre l'étiquette et la surface externe du corps tubulaire. Selon un mode de réalisation de l'invention, la différence de pression est créée par une pression d'air positive à l'intérieur du tube. Un mode de réalisation alternatif pour créer cette différence de pression consiste à créer une chambre de dépression entre l'extrudeuse et l'élément de calibration. Selon un mode de réalisation, la mise en contact entre le corps tubulaire et l'étiquette est réalisée immédiatement après la conformation du film en géométrie tubulaire.

Selon une variante du procédé le film est conformé en géométrie tubulaire conjointement au gonflage du corps tubulaire sur la surface interne du film. Selon cette variante, le plan de contact (plan formé par la zone de contact) entre le film et le corps tubulaire est incliné par rapport à l'axe du tube contrairement à l'art antérieur ou le plan de contact est toujours perpendiculaire à l'axe du tube.

Avantageusement, une deuxième différence de pression est exercée pour plaquer la surface externe du tube contre la surface interne de l'élément de calibration et éviter la rétraction du tube lors du refroidissement. Cette étape dite de calibration permet d'ajuster avec précision le diamètre extérieur du tube. Dans le procédé selon l'invention, la surface externe du tube est formée par l'étiquette qui vient glisser sur la surface interne du calibre. Le tube est ensuite refroidi, coupé, selon les méthodes habituelles.

De préférence l'étiquette est de fine épaisseur devant l'épaisseur du corps tubulaire extrudé.

L'étiquette peut se présenter sous la forme d'un film multicouche. Lorsqu'elle est mise en contact avec le corps extrudé à l'état fondu, la surface du film formant l'interface avec le corps tubulaire est chauffée à une température permettant de souder ledit corps tubulaire sur le film décor. Selon le mode préférentiel, toute la chaleur nécessaire au soudage est apportée par le corps tubulaire. Du fait de sa fine épaisseur, l'étiquette est refroidie sur sa surface externe (convexe) conjointement à l'opération de soudage. Le refroidissement se fait par contact de la surface externe de l'étiquette sur la surface interne du calibre ou par contact avec de l'eau. Le refroidissement de l'étiquette conjointement à l'opération de soudage permet de préserver la qualité du décor ainsi que les propriétés de surface de l'étiquette (brillance, matité, rugosité...).

Avantageusement l'étiquette est intégrée dans l'épaisseur de l'emballage et couvre toute la surface extérieure du corps tubulaire.

Selon un autre mode de réalisation de l'invention, l'étiquette ne forme qu'une partie de la circonférence du corps tubulaire, ses bords sont emprisonnés par la résine extrudée de telle sorte que la surface externe du corps tubulaire forme une surface continue.

L'étiquette peut apporter de la décoration à l'emballage. Elle peut également apporter des propriétés de surface modifiant « le toucher » de l'emballage. A cet égard, l'invention permet d'apporter en surface de l'emballage d'autres matières impossible ou difficile à extruder telles que du papier, des textiles, des résines « soft touch », etc.

L'étiquette est avantageusement utilisée pour ses propriétés barrières. Ce mode de réalisation évite l'usage d'un dispositif de co-extrusion du corps tubulaire.

Un autre avantage de l'invention est de faciliter l'extrusion de grades de résines difficile à extruder car générant des phénomènes de « stick and slip » lors du calibrage ou générant des défauts de surface, ou encore des ruptures d'extrudât. De manière plus générale, l'invention peut être utilisée pour augmenter la productivité car la matière fondue n'est plus en contact direct avec la surface du calibre. Les frottements de la matière fondue sur l'élément de calibration que l'on retrouve dans un procédé classique d'extrusion sont supprimés si bien que la vitesse de production peut être augmentée.

Les emballages résultants de ce procédé de fabrication offrent une très forte cohésion entre l'étiquette et le corps tubulaire. Les risques de décollement de l'étiquette lors de l'usage de l'emballage sont écartés contrairement aux emballages de l'art antérieur que l'on produit avec une étiquette adhésive. Un autre avantage est lié à l'absence de discontinuité à la surface du corps tubulaire, ce qui permet d'éviter les désagréments liés aux étiquettes dont les tranches peuvent accumuler la poussière et nuire aux propriétés esthétiques.

L'invention permet en outre de réaliser des tubes décorés de faible ou grand diamètre. Elle offre une très grande flexibilité, et peut faire l'objet de nouvelles installations ou permettre la modification d'installations d'extrusion existantes.

L'invention consiste également en un dispositif d'extrusion-étiquetage tel que décrit dans les revendications. Le dispositif réalisé selon un mode préférentiel comprend des moyens d'extrusion d'un corps tubulaire à l'état fondu ; un bac de calibration et refroidissement sous vide ; des moyens d'entrainement du tube refroidi ; des moyens de coupe ou d'enroulement et des moyens pour dérouler un film ; un conformateur en col de cygne disposé entre la tête d'extrusion et la bac de calibration sous vide ; des moyens pour exercer une première différence de pression entre l'intérieur et l'extérieur du corps tubulaire extrudé ; des moyens pour exercer une deuxième différence de pression entre l'intérieur et l'extérieur du tube lors de son passage dans le bac de calibration sous vide.

De préférence l'étiquette passe au travers d'un conformateur en col de cygne disposé entre le bec d'extrusion et l'élément de calibration. Grâce au conformateur en col de cygne, l'étiquette ne passe pas dans les outillages d'extrusion ce qui évite la dégradation du film décor. Dans la présente invention, le conformateur en col de cygne permet de prolonger les outillages d'extrusion à l'intérieur de la géométrie tubulaire formée par le film. L'usage d'un conformateur en col de cygne est avantageux pour plusieurs raisons. Il évite le contact entre le film et les outillages chauds, et de par sa compacité il permet de réduire la longueur de l'outillage appelée bec qui se prolonge à l'intérieur du col de cygne. Les pertes de charges et par conséquent les pressions générées par l'écoulement de la matière fondue dans l'outillage sont fortement diminuées.

Selon une variante de l'invention, le conformateur en col de cygne, associé à une différence de pression entre l'intérieur et l'extérieur du corps tubulaire, permet d'associer le corps tubulaire et le film décor dans le col de cygne. Un avantage de cette variante est la possibilité de positionner le conformateur en col de cygne à proximité de la tête d'extrusion afin de prendre en charge le corps tubulaire à sa sortie de l'outillage. Le corps tubulaire est déposé sur le film qui glisse sur le col de cygne et entraîne conjointement le corps tubulaire. La compacité du conformateur en col de cygne est d'un grand avantage. Ce conformateur peut être inséré facilement entre la tête d'extrusion et l'élément de calibration.

Une autre variante de l'invention consiste à extruder un corps tubulaire avec une résine comportant des agents d'expansion. Ces agents d'expansion ont pour effet de créer un gonflement du corps tubulaire à l'état fondu et ainsi mettre en contact la face externe du corps tubulaire à l'état fondu avec la face interne du film. Selon cette variante, la mise en contact de la couche externe du corps tubulaire avec la couche interne du film est crée préférentiellement par les agents d'expansion contenus dans la résine et non pas par une différence de pression. De même, La calibration du diamètre extérieur est créée préférentiellement par l'action des agents d'expansion, mais peut résulter également d'une différence de pression entre la surface interne du corps tubulaire et la surface externe du film, ou par la combinaison de l'action des agents d'expansion et d'une différence de pression. Cette variante de l'invention est particulièrement avantageuse pour alléger les emballages sans avoir l'inconvénient d'un aspect dégradé par les agents d'expansion. En effet, le film décoré qui forme la surface externe de l'emballage apporte les propriétés de surface et de décoration, et l'usage d'agents d'expansion permet de diminuer la quantité de résine formant le corps tubulaire extrudé et formant la couche interne de l'emballage.

L'invention ne se limite pas au dépôt d'un film sur un corps tubulaire à l'état fondu. Une autre variante de l'invention consiste à déposer le film décor sur la surface externe d'un corps extrudé plein comportant des agents d'expansion. Par exemple le film décor est déposé sur la surface externe d'un corps cylindrique extrudé comportant des agents d'expansion. L'expansion du corps cylindrique à la sortie de l'outillage d'extrusion provoque la mise en contact de la couche interne du film avec la surface externe du corps extrudé. Conjointement ou successivement, le diamètre extérieur du corps cylindrique décoré est ajusté grâce au passage du corps cylindrique dans un calibre et un bac de refroidissement. Cette variante de l'invention est particulièrement avantageuse pour la réalisation de pièces d'emballages comme les bouchons synthétique utilisés les bouteilles en verre. Un marché important est celui du vin. L'optimisation de ce type de bouchon peut nécessiter la différentiation des propriétés de surface (glissement, étanchéité, décoration), des propriétés à coeur (contact avec le vin, élasticité, compression, résistance).

Le film décor peut être déposé sur des corps extrudés de section ronde, ovale, carrée ou de géométrie plus complexe.

### Brève description des figures

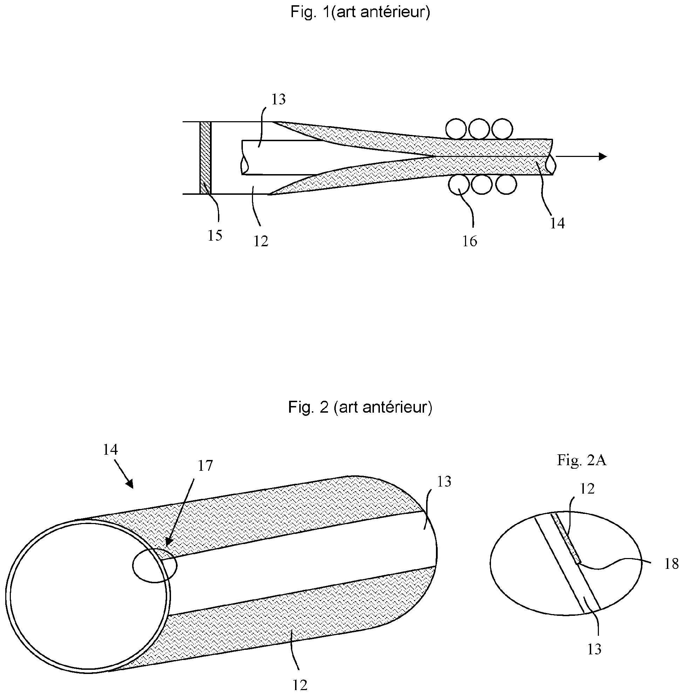

La figure 1 décrit un procédé de l'art antérieur décrit dans la demande de brevet WO2007092652 et qui consiste à ajouter en surface d'un corps tubulaire 13 une étiquette 17 non encollée grâce à une étape d'application d'une couche adhésive 15 juste avant assemblage de l'étiquette 17 sur la surface du tube 13.
La figure 2 illustre un tube14 de l'art antérieur produit avec le procédé décrit dans la demande WO2007092652. L'étiquette 17 n'est pas encastrée dans le corps tubulaire extrudé 13. Les bords 18 de l'étiquette 17 créent une discontinuité de la surface extérieure de l'emballage qui nuit à l'esthétique.
La figure 3 décrit le mode préférentiel de réalisation du procédé selon l'invention. Ce procédé consiste à associer des opérations d'extrusion et des opérations d'étiquetage.
La figure 4 illustre un procédé selon l'invention et un exemple de dispositif consistant à extruder un corps tubulaire 13, et à déposer à la surface dudit corps tubulaire un film décor 12.
La figure 5 illustre un exemple de dispositif permettant de mettre en contact le film décor 12 avec le corps tubulaire 13, et calibrer le diamètre externe du tube 14.
La figure 6 montre un tube 14 obtenu avec le procédé décrit dans l'invention. Les extrémités 18 du film décor 12 sont encastrées dans le corps tubulaire 13.
La figure 7 illustre une vue en coupe partielle d'un tube 14 comprenant un film décor 12 en surface dont les extrémités 18 et 18' sont disposées bout à bout. Les extrémités 18 et 18' sont encastrées dans le corps tubulaire 13.
La figure 8 montre une variante d'un tube 14 comprenant un film décor 12 dont les extrémités 18 et 18' sont disposées bout à bout. Selon cette variante, les extrémités 18 et 18' sont en contact et la surface externe du tube 14 forme une surface lisse continue.

### Exposé détaillé de l'invention

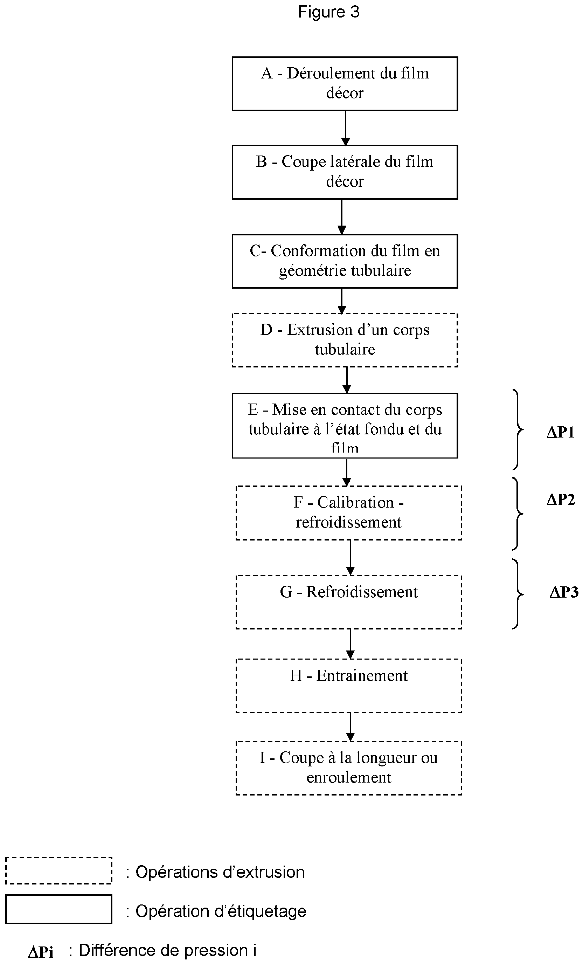

La figure 3 décrit le mode préférentiel de réalisation de l'invention qui consiste former un tube décoré en déposant un film décor sur la surface d'un tube extrudé alors que le corps extrudé est à l'état fondu. Le procédé associe avantageusement des opérations d'extrusion D, F, G, H et I et les opérations d'étiquetage A, B, C et E.

L'opération d'extrusion D consiste à former un corps tubulaire à l'état fondu avec les moyens connus d'extrusion. Selon le mode préférentiel, ces moyens comportent une extrudeuse et une tête d'extrusion 24. Selon un mode alternatif, ces moyens comportent plusieurs extrudeuses et une tête de co-extrusion. Selon le mode préférentiel ladite tête d'extrusion 24 est prolongée par une partie tubulaire appelée bec d'extrusion 27. Le diamètre du bec 27 est inférieur au diamètre du tube à réaliser de sorte que le bec puisse s'engager à l'intérieur du conformateur 20. La résine extrudée sort par l'extrémité du bec 27 et forme une paraison 13 située à l'intérieur du de la géométrie tubulaire formée par le film décor.

En amont de l'opération d'extrusion D, les opérations d'étiquetage A, B et C consistent respectivement à dérouler un film décor disposé en bobine (l'étiquette), puis éventuellement à découper latéralement les bords du film décor afin d'ajuster l'étiquette au diamètre du tube fabriqué et enfin à conformer le film en géométrie tubulaire. La conformation en géométrie tubulaire doit être compacte pour permettre l'extrusion du corps tubulaire à l'état fondu à l'intérieur de la géométrie tubulaire formée par le film décor.

L'opération E consiste à mettre en contact la surface externe du corps tubulaire à l'état fondu sur la surface interne du film décor. Dans le mode préférentiel décrit figure 3, les opérations C et E sont réalisées séquentiellement. La mise en contact entre le corps tubulaire à l'état fondu et le film décor se fait séquentiellement à l'enroulement du film décor autour du corps tubulaire. Le moyen utilisé pour l'opération C est préférentiellement un conformateur en col de cygne qui permet dans un encombrement réduit de disposer le film décor autour du corps tubulaire à l'état fondu. Le moyen utilisé pour l'opération E, consistant à mettre en contact le corps tubulaire extrudé et le film décor, est une différence de pression ΔP1 entre l'intérieur et l'extérieur du corps tubulaire à l'état fondu. Le mode de réalisation préférentiel pour l'application de cette différence de pression est de boucher au moins partiellement le corps tubulaire à l'état fondu et générer une pression d'air à l'intérieur du corps tubulaire permettant de « gonfler » le corps tubulaire à l'état fondu contre le film décor. Selon ce mode de réalisation, il peut être avantageux de créer une légère fuite d'air au niveau du bouchon qui a pour effet de créer un coussin d'air entre le bouchon et le corps tubulaire à l'état fondu. Ce coussin d'air évite de marquer la surface interne du tube et permet d'éviter réchauffement du bouchon. Un autre mode de réalisation consiste à exercer une dépression dans un caisson disposé autour du col de cygne. Le diamètre du corps tubulaire étiqueté à la sortie du col de cygne est sensiblement équivalent au diamètre du tube que l'on fabrique.

Un mode de réalisation alternatif consiste à réaliser les opérations de conformation du film C et de mise en contact E de façon simultanée. Dans ce cas, l'opération d'extrusion D peut être réalisée antérieurement ou simultanément à l'opération de conformation C.

L'opération F qui intervient après les opérations D et E. Elle permet de calibrer le diamètre extérieur du tube étiqueté. L'opération F est obtenue par le passage du tube extrudé dans un élément de calibration comportant des moyens de refroidissement et de calibration. Une différence de pression ΔP2 entre l'intérieur et l'extérieur du tube est exercée pendant l'opération F. Cette différence de pression plaque la surface externe du tube contre la surface interne du calibre conjointement au refroidissement du tube. Selon le mode préférentiel, la différence de pression ΔP2 est créée par une pression négative dans l'élément de calibration. De l'eau est généralement utilisée pour refroidir le tube, soit sous forme de bain, soit sous forme de douche. Un grand avantage du procédé est lié au fait que la tribologie lors de l'opération de calibration est sensiblement modifiée en comparaison avec le procédé d'extrusion classique. En effet dans le procédé selon l'invention, la matière plastique à l'état fondu ne se trouve plus en contact avec le calibre puisque l'étiquette est disposée tout autour du corps tubulaire à l'état fondu. Cela présente de nombreux avantages en plus des avantages liés à la décoration en ligne :
- Possibilité d'augmentation de la vitesse de production sans création de défauts
- Elargissement de la gamme des résines possibles pour fabriquer des tubes

L'opération G est optionnelle. Elle permet de parfaire le refroidissement du tube tout en gardant le diamètre constant. L'opération G est utile surtout lorsque l'épaisseur du tube est importante et si à l'issu de l'opération F le tube n'est pas suffisamment refroidi. Lors de l'opération de refroidissement G, une différence de pression ΔP3 entre l'intérieur et l'extérieur du tube peut être utilisée pour maintenir constant le diamètre du tube pendant le refroidissement. L'opération G est couramment utilisée en extrusion de tube selon les méthodes classiques.

L'opération d'entraînement H est une opération similaire à celle utilisée pour l'extrusion de tube. Elle consiste à entraîner le tube formé à l'aide de courroies d'entrainement profilées.

L'opération de coupe à la longueur I consiste à couper le tube à la longueur désirée. Dans le procédé selon l'invention, l'opération de coupe doit être synchronisée avec la décoration du tube.

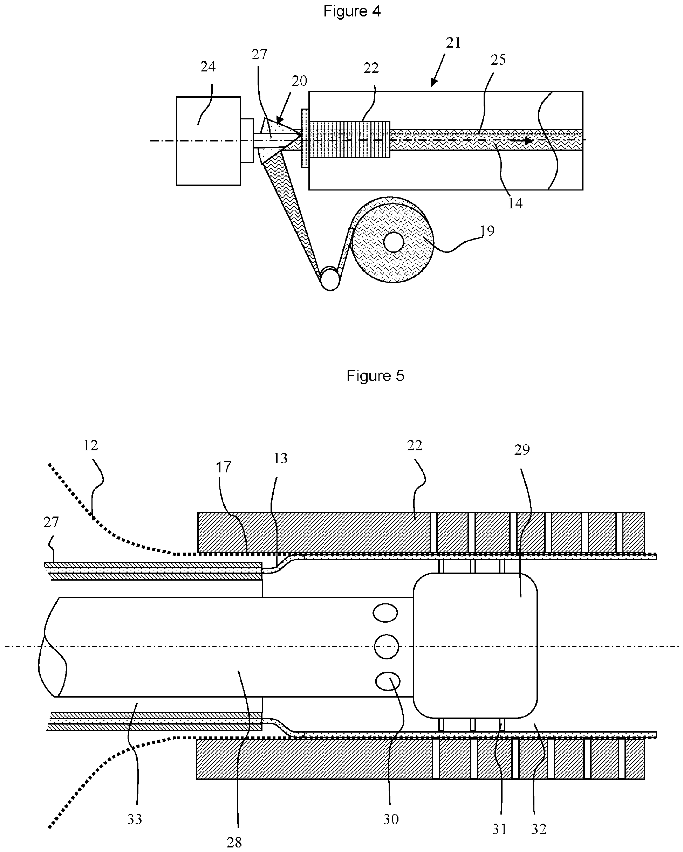

La figure 4 illustre un exemple du procédé selon l'invention et un exemple de dispositif. Ce procédé consiste à extruder un corps tubulaire 13, et à déposer sur la surface externe dudit corps tubulaire à l'état fondu un film décor 12.

Le procédé comprend l'extrusion du corps tubulaire 13 selon les méthodes connues dans l'industrie des plastiques. La figure 3 illustre le procédé le plus répandu qui consiste à utiliser une extrudeuse permettant de faire fondre la résine thermoplastique puis à la mettre en forme dans un outillage 24 comprenant un bec 27. Selon le mode préférentiel l'extrudeuse est disposée perpendiculairement à l'axe d'extrusion. Le bec 27 dont le diamètre est inférieur à celui du tube fabriqué est engagé à l'intérieur d'un conformateur appelé col de cygne 20. L'opération d'extrusion du corps tubulaire 13 depuis l'extrémité du bec 27 se situe proche de la partie aval du col de cygne 20, c'est à dire proche de la transition à partir de laquelle le film décor 12 forme un cylindre.

Le procédé comprend l'usage d'un film décor 12 conditionné en rouleaux 19. Le film décor est déroulé dans un procédé continu à la vitesse linéaire de fabrication du tube. Il est ensuite conformé en géométrie tubulaire autour du corps tubulaire extrudé à l'état fondu 13 par l'intermédiaire d'un conformateur en col de cygne 20. Un avantage du mode préférentiel réalisation de l'invention est lié au fait que le film 12 est totalement séparé de l'unité d'extrusion et de l'outillage 24 ce qui permet d'éviter de soumettre le film 12 à des températures élevées et d'éviter la dégradation du décor. Le col de cygne 20 peut être de très faible encombrement, et s'insère entre le dispositif d'extrusion 24 et l'élément de calibration 22 et refroidissement 21 du tube 14. Dans le mode préférentiel, un conformateur de type col de cygne est utilisé.

Lors du passage du film décor 12 dans le conformateur en col de cygne 20, la surface interne du film décor peut défiler proche de la paroi du bec d'extrusion 27 et s'échauffer sous l'effet du rayonnement de la surface du bec d'extrusion. En fonction du type de film utilisé, il peut être avantageux de tirer parti du rayonnement pour préchauffer la surface interne du film 12 avant la mise en contact avec la matière extrudée ; ou inversement il peut s'avérer nécessaire de protéger le film décor du rayonnement du bec d'extrusion pour éviter par exemple la dégradation du décor. Le rayonnement du bec d'extrusion 27 peut être limité en modifiant la surface rayonnante dudit bec.

Selon le mode préférentiel de réalisation de l'invention illustré figure 5, la mise en contact du corps tubulaire à l'état fondu et du film décor se fait à la sortie du col de cygne quand le film décor forme une géométrie cylindrique. Cette mise en contact est assurée par une différence de pression ΔP1 entre l'intérieur et l'extérieur du corps tubulaire à l'état fondu. Selon ce mode préférentiel, une pression positive est créée à l'intérieur du corps tubulaire à l'état fondu 13 par l'intermédiaire d'un bouchon 29 qui obstrue au moins partiellement la section interne dudit corps tubulaire extrudé. Selon le mode préférentiel, le bouchon 29 comporte des parties flexibles 31 qui assurent une étanchéité au moins partielle avec la paroi du corps tubulaire à l'état fondu 13. Selon l'invention, lesdites parties flexibles cèdent légèrement sous l'effet de la pression ce qui a pour effet la création d'un coussin d'air et d'une légère fuite aval 32 entre le bouchon 29 et la paroi du corps tubulaire. Ledit bouchon est fixé à l'extrémité d'une canne de soufflage 28 de préférence refroidie et fixée sur la tête d'extrusion 24. La fuite d'air aval 32 a un effet secondaire de refroidissement de la surface interne du corps tubulaire.

Un mode de réalisation alternatif de l'invention consiste à créer une seconde fuite d'air au travers de la tête d'extrusion appelée fuite amont 33. Le débit de la fuite amont est ajusté précisément et permet de stabiliser le procédé et en particulier la mise en contact du corps tubulaire avec le film décor.

Un autre mode de réalisation alternatif de l'invention consiste à utiliser un bouchon 29 expansible. Un bouchon expansible facilite le démarrage car sa section réduite facilite le passage du corps tubulaire. L'expansion du bouchon permet de réduire et contrôler la fuite aval 32.

Un autre mode de réalisation alternatif de l'invention consiste à utiliser une canne de soufflage rétractable et escamotable. Selon ce mode de réalisation, la canne de soufflage 28 et le bouchon 29 sont localisés dans l'outillage d'extrusion au moment du démarrage ce qui facilite l'extrusion du corps tubulaire. La canne de soufflage 28 et le bouchon 29 sont ensuite avancés progressivement en position de travail.

Selon le mode préférentiel de l'invention, l'assemblage du corps tubulaire 13 et du film décor 12 se fait lorsque le corps tubulaire 13 est à l'état fondu de sorte que la chaleur du corps tubulaire fasse fondre la surface interne du film décor 12. Le temps de contact sans refroidissement actif, entre le corps tubulaire fondu 13 et le film décor 12 est ajusté pour permettre un soudage optimal sans dégradation du décor. Ce temps peut être ajusté en modifiant les outillages afin de retarder le passage du tube dans la zone de calibrage refroidie activement. Ce temps est optimisé en fonction du film 12 utilisé (épaisseur, nombre de couches, nature des couches, position du décor dans l'épaisseur, nature des encres, pigments, etc...) et du corps tubulaire tubulaire 13 (épaisseur, nombre de couches, nature des couches). En général, ce temps est très court et le refroidissement actif par la surface externe du tube 14 peut être activé rapidement après assemblage du corps tubulaire et du film décor. Selon le mode préférentiel, le refroidissement de la surface externe du tube 14 se fait dès entrée du tube 14 dans le calibre ce qui permet de préserver la qualité d'impression du film décor. Selon le mode préférentiel de réalisation de l'invention, la surface externe du film décor n'est pas fondue au cours de la fabrication du tube 14. En particulier, la surface décorée est maintenue à une température au moins inférieure à la température de fusion de la couche support ou inférieure à la température de dégradation des encres ou pigments. De préférence le col de cygne 20 qui est en amont de l'élément de calibration 22 et refroidissement 21, est également refroidi ou régulé en température au moyen d'un circuit d'eau.

Lors de l'opération de mise en contact du corps tubulaire à l'état fondu et du film décor, le corps tubulaire à l'état fondu est « gonflé » sous l'effet de la différence de pression ΔP1 entre l'intérieur et l'extérieur du corps tubulaire à l'état fondu. Après la mise en contact, le corps tubulaire est entraîné à la vitesse de défilement du film décor. Généralement, le corps tubulaire subit un étirement radial et axial entre la sortie du bec d'extrusion 27 et la mise en contact. Cet effet d'étirement peut être utilisé pour ajuster l'épaisseur du corps tubulaire et stabiliser le procédé.

Selon le mode préférentiel de réalisation de l'invention, le diamètre externe du tube 14 formé par le corps tubulaire à l'état fondu 13 et le film décor 12 est calibré par le passage dudit tube 14 dans l'élément de calibration 22 et par l'action simultanée d'une différence de pression exercée entre la surface interne et la surface externe du tube 14. Cette différence de pression apparait lors de l'entrée du tube 14 dans l'élément de calibration 22, et a pour effet de plaquer la surface externe du tube 14 contre la surface interne de l'élément de calibration 22. La surface externe du film décor qui n'est pas fondue se retrouve donc en contact avec la surface du calibre. Afin de limiter le frottement entre la surface externe du film et les outils de calibration, il peut être avantageux de créer un film d'eau entre les outils de calibration et la surface externe du film.

La position relative du bouchon 29 par rapport à l'élément de calibration 22 et au bac de refroidissement 21 permet de fixer les zones de mise en contact et de calibration. Si le bouchon 29 est situé en amont de l'élément de calibration 22, la différence de pression ΔP1 créée par le bouchon 29 crée une zone de mise en contact située en amont du bac de calibration. La différence de pression ΔP2 dans l'élément de calibration 22 permet de calibrer le diamètre externe du tube 14. Si le bouchon est situé dans l'élément de calibration 22; on retrouve une zone de mise en contact avec une différence de pression ΔP1, puis une zone de calibration du diamètre externe avec une différence de pression (ΔP1 + ΔP2), et enfin une zone de calibration du diamètre externe avec une différence de pression ΔP2. En fonction du film décor et de la matière extrudée, la position relative du bouchon 29 par rapport à l'élément de calibration 22 est ajustée.

Le mode de réalisation de l'invention préférentiel consiste à utiliser au moins une première différence de pression ΔP1 pour assurer la mise en contact du film décor 12 avec le corps tubulaire à l'état fondu 13 et une seconde différence de pression ΔP2 pour calibrer le diamètre externe du tube 14. Cette configuration est particulièrement avantageuse pour les arrêts et démarrage de la ligne et pour la précision de la calibration du diamètre extérieur du tube.

Selon un autre mode de réalisation de l'invention, on utilise une seule différence de pression ΔP1 pour effectuer les opérations de mise en contact et de calibration. Dans cette variante, on utilise une canne de soufflage 28 suffisamment longue pour maintenir le diamètre du tube pendant le durcissement sous l'effet du refroidissement de la matière extrudée. Ce mode de réalisation est avantageusement couplé à une canne de soufflage 28 rétractable et escamotable.

Selon un autre mode de réalisation de l'invention on utilise une seule différence de pression ΔP2. Ce mode de réalisation peut être avantageusement utilisé lorsque des agents d'expansion sont ajoutés dans la matière extrudée. Selon ce mode de réalisation l'ajout d'agents d'expansion dans la matière extrudée a pour effet de créer la mise en contact du corps tubulaire 13 et de l'étiquette 17 tandis que la différence de pression ΔP2 permet de calibrer le diamètre du tube.

Une particularité de l'invention réside dans le fait que la surface de frottement du tube 14 dans les outillages de calibration est formée par la surface externe du film décor 12 qui n'est pas à l'état fondu. Cela a pour effet de faciliter l'opération de calibration du diamètre externe du tube. Les propriétés tribologiques entre la surface interne du calibre et la surface externe du tube sont radicalement modifiées par rapport à une opération d'extrusion classique. Le procédé permet ainsi l'utilisation de nouvelles matières extrudées ou l'augmentation des vitesses d'extrusion.

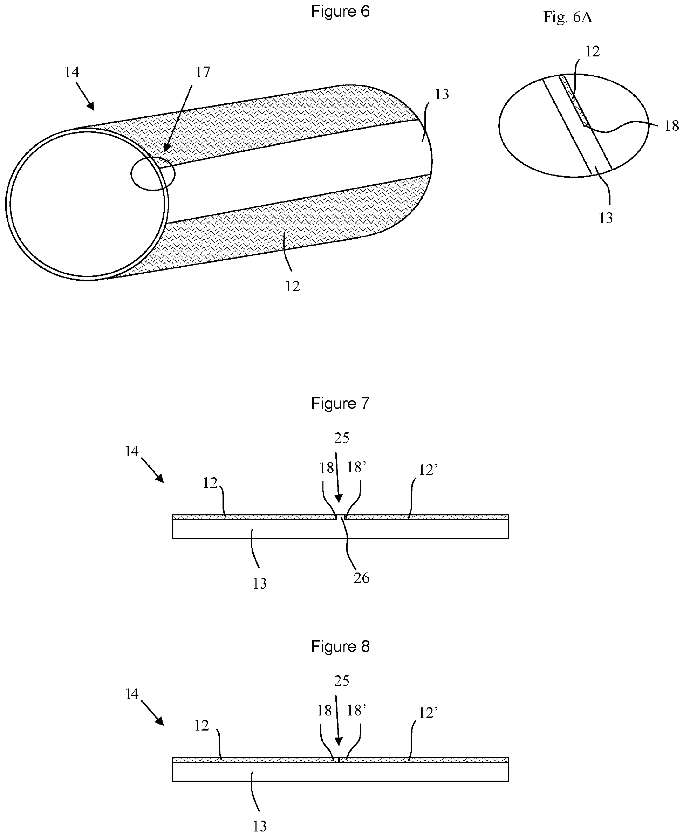

La figure 6 illustre les tubes 14 obtenus par le procédé. Le film décor 12 forme tout ou partie de la surface externe du tube 14. Le détail 6A montre l'incrustation de l'extrémité 18 du film décor dans la paroi du corps tubulaire 13. Il y a continuité de la surface externe du tube 14 au niveau de l'extrémité du film décor 12. L'épaisseur de l'étiquette 17 est faible devant l'épaisseur du corps tubulaire 13.

Les figures 7 et 8 illustrent la réalisation de l'invention avec une étiquette sur toute la périphérie du tube.

La figure 7 montre un premier exemple de réalisation d'une décoration 360° du tube ou les extrémités 18 et 18' de l'étiquette 17 sont disposées bout à bout et légèrement espacées. L'espacement des extrémités de l'étiquette 17 peut être lié à la précision de la coupe latérale de l'étiquette 17. De faibles espacements 25 des extrémités 18 et 18' inférieurs à 100 microns et invisibles à l'oeil nu sont parfois obtenus. L'espacement 25 est comblé par la résine formant le corps tubulaire 13, créant ainsi une surface externe du tube 14 lisse et sans discontinuité au niveau des extrémités 18 et 18'.

La figure 8 illustre un deuxième exemple de réalisation ou les extrémités 18 et 18' de l'étiquette 17 sont disposées bout à bout et mises en contact. Dans cette configuration, on observe une continuité du film décor et de la surface externe du tube 14. Comme l'épaisseur de l'étiquette 17 est faible devant l'épaisseur du corps tubulaire 13, les extrémités 18 et 18' sont imperceptibles. Ce mode de réalisation est particulièrement intéressant pour assurer une décoration 360° ou assurer la continuité des propriétés barrières lorsque la couche barrière est portée par l'étiquette 17. Ce second mode de réalisation peut nécessiter des moyens de coupe latérale de l'étiquette 17 situés en amont du col de cygne 20. Ces moyens de coupe permettent un ajustement précis de la largeur du film décor pour obtenir le positionnement bout à bout illustré figure 8.

Un autre exemple de réalisation de l'invention consiste à former un recouvrement entre les extrémités 18 et 18' du film décor. Ce mode de réalisation est particulièrement intéressant lorsque la surface inférieure du film 12 peut être soudée sur sa surface supérieure. Avantageusement, le recouvrement est soudé lors des opérations E de mise en contact et F de calibration refroidissement. Selon ce mode de réalisation préférentiel, le recouvrement est soudé grâce à la chaleur apportée par le corps tubulaire extrudé à l'état fondu. Un mode de réalisation alternatif consiste à ajouter une opération de préchauffage avant l'opération E ou une opération de soudage du recouvrement antérieure, simultanée, ou postérieure à l'opération E.

Afin de renforcer la résistance du corps tubulaire au niveau des extrémités 18 et 18' du film décor, un autre exemple de réalisation de l'invention consiste à créer une augmentation de l'épaisseur du corps tubulaire à l'endroit de la jonction des extrémités du film. Cette augmentation locale de l'épaisseur du tube permet d'obtenir une résistance homogène du tube sur sa circonférence.

Un autre exemple de réalisation de l'invention consiste à ajouter une bande de renfort entre le film décor 12 et le corps tubulaire 13 qui relie les extrémités du film décor. Avantageusement, la bande de renfort est soudée grâce à la chaleur apportée par le corps tubulaire 13 à l'état fondu. Si nécessaire une opération de préchauffage ou une opération de soudage peut être ajoutée pour fixer la bande de renfort sur la face interne du film 12.

Le corps tubulaire extrudé ou co-extrudé 13 est généralement composé de résine thermoplastique de la famille des polyoléfines (par exemple polyéthylène basse densité linéaire, polyéthylène basse densité , polyéthylène haute densité, mélanges de polyéthylène, polypropylène), mais l'invention ne se limite pas à l'usage des résines précédemment décrites. Par exemple, la structure multicouche avec une résine d'éthylène vinyle alcool comme barrière à l'oxygène et une résine polyoléfine est couramment utilisée pour améliorer les performances barrières de l'emballage. Le corps tubulaire 13 représente au moins 70% de l'épaisseur du tube 14 et préférentiellement au moins 80% de l'épaisseur du tube 14.

L'étiquette 17 forme au moins une partie de la surface externe du tube 14. Ce film décor permet par exemple l'identification du produit emballé, du fabricant, apporte la décoration, etc. Selon le mode préférentiel de réalisation, le film décor est de fine épaisseur. Il est monocouche ou multicouche et peut être composé d'une grande variété de matière incluant le papier, l'aluminium et les matières plastiques. Le film support peut également être composé en partie d'un film textile pour apporter des propriétés sensorielles spécifiques. Le film décor 12 comprend au moins une couche qui sous l'effet de la chaleur apporté par le corps tubulaire 13 permet l'adhésion du film décor sur ledit corps extrudé. Le film décor est préférentiellement multicouche. La structure multicouche peut comprendre par exemple des couches en polyéthylène, polypropylène, polyéthylène téréphtalate, polyamide, éthylène vinyle alcool, papier, aluminium, des couches de métallisation ou d'oxyde de silicium, des couches adhésives, etc. Préférentiellement l'épaisseur du film décor est comprise entre 5 et 100 microns, et avantageusement entre 10 et 50 microns.

Selon le mode préférentiel de réalisation de l'invention l'étiquette 17 comporte dans sa structure au moins une couche dont la température de fusion est supérieure 160°C et au moins une couche de même nature que le corps tubulaire. La couche qui présente une bonne stabilité thermique peut être composée par exemple de polyéthylène téréphtalate bi-orienté (PET), de polyamide (PA), d'aluminium (Alu) ou encore de papier. Pour un corps tubulaire en polyéthylène, voici des exemples de structure de film décor : PET/PE, PE/PET/PE, PA/PE, Alu/PE, PE/Alu/PE, Papier/PET/PE.

L'étiquette 17 peut être imprimée selon toutes les méthodes connues d'impression à plat comme par exemple, la flexographie, la sérigraphie, l'héliogravure, l'impression par typographie, l'impression offset, ou encore l'impression digitale et combinaison de ces technologies d'impression. L'invention sera associée avantageusement à l'impression numérique pour les productions nécessitant flexibilité et changement rapide de décoration. L'impression est généralement recouverte par un vernis protecteur apportant également des effets de brillance ou matité par exemple. Le choix du vernis est important, en particulier son coefficient de frottement sur les outillages de mise en forme et calibrage.

L'invention peut être avantageusement associée à une impression numérique en ligne de l'étiquette 17. Dans ce cas de figure, le rouleau de film décor 19 illustré figure 4 est remplacé par une machine d'impression numérique fonctionnant de manière synchronisée avec la ligne d'extrusion étiquetage. Selon une variante de cette configuration, une ou plusieurs opérations de complexage peuvent être également effectuées en ligne avant le procédé d'extrusion décoration. Par exemple une opération de complexage est nécessaire lorsque l'on souhaite que l'impression se retrouve emprisonnée dans l'épaisseur du film décor 12. Une configuration possible permettant d'avoir la couche imprimée emprisonnée résulte de la succession des étapes suivantes :
- Déroulement d'un premier film non décoré
- Impression numérique du premier film
- Complexage d'un deuxième film sur le premier film afin d'emprisonner l'impression - Obtention du film décor
- Découpe latérale des bords du film décor
- Procédé d'extrusion décoration

L'impression du film décor 12 peut être réalisée en recto ou en verso de telle sorte que l'impression se retrouve en surface du tube 14 ou emprisonnée dans l'épaisseur du tube. L'impression est avantageuse pour réaliser des décorations complexes à moindre coût car l'opération de décoration est réalisée à plat sur un film de fine épaisseur.

L'invention est particulièrement avantageuse pour réaliser à moindre coût des tubes avec une décoration de haut de gamme.

L'invention est particulièrement avantageuse pour améliorer les propriétés sensorielles des tubes en apportant avec le film décor une couche de surface ayant un « toucher » particulier. Ces propriétés sont apportées par exemple par un film polypropylène biorienté mat, ou un film textile.

L'invention est particulièrement avantageuse car elle permet de modifier la fonctionnalité de l'emballage en changeant de film décor. Ces fonctionnalités peuvent être d'ordre esthétique (décoration), sensorielles (toucher), techniques (propriétés barrières) ou informatives (communication sur l'emballage).

L'invention est particulièrement avantageuse car le film décor fait partie intégrante de l'emballage. Il est intégré dans sa structure et contribue à ses propriétés.

L'invention ne se limite pas à la réalisation des quelques exemples de structures multicouches cités dans le texte. Il est évident pour l'homme du métier que l'invention permet d'augmenter le nombre de structure réalisable et permet l'association de matières très différentes (plastiques, papier, aluminium, ...).

L'invention permet par défaut de réaliser des corps tubulaires sans décoration mais comportant un film en surface. Cette variante peut être utilisée plus spécifiquement pour améliorer les propriétés mécaniques, barrières ou sensorielles (toucher) des tubes.

L'invention peut être utilisée dans le domaine de l'emballage principalement pour l'apport d'un décor mais également dans des domaines techniques pour l'amélioration des propriétés mécaniques ou barrières. Un mode avantageux de réalisation de l'invention consiste à apporter la barrière et le décor par l'intermédiaire du film. Le film multicouche qui apporte la barrière et le décor est associé à un corps extrudé monocouche, ce qui permet de simplifier le dispositif d'extrusion.

Pour l'extrusion de produit difficile, l'invention peut être utilisée pour diminuer les couts de production en augmentant la vitesse de production.

Une première variante de l'invention conduit à la succession des opérations suivantes :
- Réalisation par soudage d'un premier corps tubulaire à partir d'un film monocouche ou multicouche
- Extrusion d'un deuxième corps tubulaire à l'état fondu sur ledit premier corps tubulaire
- Conjointement, dépôt de l'étiquette sur la surface externe du second corps tubulaire selon le procédé de l'invention.

Une deuxième variante de l'invention consiste à emprisonner l'étiquette dans la paroi du tube. Pour cela, les opérations suivant es sont mis en oeuvre :
- Extrusion d'un premier corps tubulaire à l'état fondu
- Conjointement, dépôt de l'étiquette sur la face externe du premier corps tubulaire selon le procédé de l'invention
- Puis, extrusion d'un deuxième corps tubulaire et dépôt dudit deuxième corps tubulaire à l'état fondu sur la face externe de l'étiquette.
Le second corps tubulaire à l'état fondu est déposé sur la face externe de l'étiquette préférentiellement lorsque le premier corps tubulaire est au moins partiellement refroidi.

Une troisième variante de l'invention consiste à rapporter un film sur la surface externe d'un corps tubulaire extrudé et comportant des agents d'expansion. Le procédé suivant est mis en oeuvre :
- Extrusion du corps tubulaire à l'état fondu à partir d'une résine comportant des agents d'expansion
- Disposition du film autour du corps tubulaire grâce à un conformateur en col de cygne.
- Mise en contact du de la surface externe du corps tubulaire avec la face interne du film grâce au gonflement du corps tubulaire sous l'effet des agents d'expansion.
- Calibration du corps tubulaire et refroidissement.

Une quatrième variante de l'invention est utilisée pour fabriquer des corps cylindriques comportant des agents d'expansion et un film en surface. Le procédé suivant est utilisé :
- Extrusion d'un corps cylindre à l'état fondu à partir d'une résine comportant des agents d'expansion.
- Disposition du film autour du corps cylindrique grâce à un conformateur en col de cygne.
- La mise en contact de la surface interne du film et de la surface externe du corps cylindrique est provoquée par le gonflement du corps cylindrique sous l'effet des agents d'expansion.
- Calibration du corps cylindrique et refroidissement.

Les agents d'expansion utilisés peuvent être des agents d'expansion physique ou chimique. Les agents d'expansion physiques mélangés au polymère sont par exemple du gaz carbonique ou de l'azote dont le changement d'état (liquide à gazeux) crée l'expansion du polymère à l'état fondu. Les agents d'expansion chimique peuvent être des azodicarbonamide ou azobisformamide. L'avantage de l'invention pour la réalisation de corps tubulaire ou cylindrique expansés est la combinaison des propriétés de surface et décoration apportées par le film et les propriétés d'allégement apportées à coeur par les agents d'expansion.

## Revendications

1. Procédé d'extrusion et d'étiquetage d'un tube d'emballage (14) comprenant les étapes successives suivantes réalisées sur une ligne d'extrusion-étiquetage:
a) formation d'une étiquette (17) partiellement ou totalement tubulaire à partir d'un film (12),
b) introduction de l'étiquette (17) dans un élément de calibration (22),
c) extrusion d'un corps tubulaire (13) du côté de la face concave de l'étiquette (17),
d) mise en contact de la face externe du corps tubulaire (13) avec la face concave de l'étiquette (17);
l'étape c) étant réalisée dans l'élément de calibration (22).

2. Procédé selon la revendication 1 dans lequel l'étape d) est réalisée au moyen d'une première différence de pression (ΔP1) que l'on instaure entre l'intérieur et l'extérieur du corps tubulaire (13).

3. Procédé selon la revendication 1 ou 2 dans lequel on instaure une deuxième différence de pression (ΔP2) entre l'intérieur et l'extérieur du tube (14).

4. Procédé selon la revendication 3 dans lequel la deuxième différence de pression (ΔP2) est utilisée exclusivement pour calibrer le tube (14).

5. Procédé selon l'une des revendications 1 à 4, dans lequel le corps tubulaire comprend une résine comportant au moins un agent d'expansion pour créer un gonflement du corps tubulaire soit à l'état fondu ou après extrusion.

6. Procédé selon l'une des revendications 1 à 5, dans lequel l'étiquette (17) comprend deux extrémités (18, 18') qui sont disposées bout à bout, ou se recouvrent ou sont séparées par un espacement (25), ledit espacement étant comblé par la résine formant le corps tubulaire (13).

7. Procédé selon l'une des revendications précédentes, dans lequel on crée une augmentation de l'épaisseur du corps tubulaire à l'endroit des jonctions des extrémités du film.

8. Procédé selon l'une des revendications précédentes 1 à 6, dans lequel on ajoute une bande de renfort qui relie les extrémités du film décor.

9. Procédé selon l'une des revendications 1 à 8, dans lequel on emprisonne l'étiquette dans la paroi du tube en extrudant un deuxième corps tubulaire et en le déposant à l'état fondu sur la face externe de l'étiquette.

10. Procédé selon l'une des revendications précédentes, dans lequel le corps tubulaire a une structure moncouche ou multicouche.

11. Procédé selon l'une des revendications précédentes, dans lequel l'étiquette a une structure monocouche ou multicouche.

12. Procédé selon la revendication précédente, dans lequel la structure multicouche comprend des couches en polyéthylène, polypropylène, polyéthylène téréphtalate, polyamide, éthylène vinyle alcool, papier, aluminium, des couches de métallisation ou d'oxyde de silicium, et des couches adhésives.

13. Procédé selon l'une des revendications précédentes, dans lequel l'étiquette est imprimée.

14. Dispositif d'extrusion-étiquetage comprenant:
a) un dispositif de formation d'une étiquette (17) partiellement ou totalement tubulaire à partir d'un film (12),
b) un dispositif d'extrusion comprenant un bec d'extrusion (27) pour la formation d'un corps tubulaire (13), du côté de la face concave de l'étiquette (17),
c) un élément de calibration (22) ;
le bec d'extrusion (27) étant disposé à l'intérieur de l'élément de calibration (22).

15. Dispositif selon la revendication 14 comprenant des moyens pour instaurer une première différence de pression (ΔP1) entre l'intérieur et l'extérieur du corps tubulaire (13).

16. Dispositif selon la revendication 15 dans lequel la première différence de pression (ΔP1) est instaurée au moyen d'une alimentation de gaz sous pression disposée à l'intérieur du corps tubulaire (13).

17. Dispositif selon la revendication 15 ou 16 comprenant des moyens pour instaurer une deuxième différence de pression (ΔP2) entre l'intérieur et l'extérieur du tube (14)

18. Tube d'emballage extrudé et étiqueté obtenu selon le procédé de l'une quelconque des revendications 1 à 13, **caractérisé par le fait que** le film (12) est soudé ou incrusté dans la paroi du corps tubulaire (13).

19. Tube d'emballage selon la revendication 18, dans lequel le corps tubulaire comprend une résine comportant au moins un agent d'expansion pour créer un gonflement du corps tubulaire soit à l'état fondu ou après extrusion.

20. Tube d'emballage selon la revendication 18 ou 19, dans lequel l'étiquette (17) comprend deux extrémités (18, 18') qui sont disposées bout à bout, ou se recouvrent ou sont séparées par un espacement (25), ledit espacement étant comblé par la résine formant le corps tubulaire (13).

21. Tube d'emballage selon l'une des revendications 18 à 20, comprenant une augmentation de l'épaisseur du corps tubulaire à l'endroit des jonctions des extrémités du film.

22. Tube d'emballage selon l'une des revendications 18 à 21, comprenant une bande de renfort reliant les extrémités du film décor.

23. Tube d'emballage selon l'une des revendications 18 à 22, dans lequel l'étiquette est emprisonnée entre deux parois du tube.

24. Tube d'emballage selon l'une des revendications 18 à 23, dans lequel le corps tubulaire est formé d'une structure monocouche ou multicouche.

25. Tube d'emballage selon l'une des revendications 18 à 24, dans lequel l'étiquette a une structure monocouche ou multicouche.

26. Tube selon la revendication précédente, dans lequel la structure multicouche comprend des couches en polyéthylène, polypropylène, polyéthylène téréphtalate, polyamide, éthylène vinyle alcool, papier, aluminium, des couches de métallisation ou d'oxyde de silicium, et des couches adhésives.

27. Tube selon l'une des revendications précédentes 18 à 26, dans lequel l'étiquette est imprimée.

## Patentansprüche

1. Verfahren zum Extrudieren und Etikettieren eines Verpackungsschlauchs (14), umfassend die folgenden aufeinanderfolgenden Schritte, die auf einer Extrudierungs-Etikettierungslinie ausgeführt werden:
a) Bilden eines ganz oder teilweise röhrenförmigen Etiketts (17) aus einer Folie (12),
b) Einführen des Etiketts (17) in ein Kalibrierungselement (22),
c) Extrudieren eines röhrenförmigen Körpers (13) auf der Seite der konkaven Fläche des Etiketts (17),
d) Inkontaktbringen der Außenfläche des röhrenförmigen Körpers (13) mit der konkaven Fläche des Etiketts (17);
wobei der Schritt c) in dem Kalibrierungselement (22) durchgeführt wird.

2. Verfahren nach Anspruch 1, wobei der Schritt d) durch einen ersten Druckunterschied (ΔP1) durchgeführt wird, der zwischen dem Inneren und dem Äußeren des röhrenförmigen Körpers (13) gebildet wird.

3. Verfahren nach Anspruch 1 oder 2, wobei ein zweiter Druckunterschied (ΔP2) zwischen dem Inneren und dem Äußeren des Schlauchs (14) gebildet wird.

4. Verfahren nach Anspruch 3, wobei der zweite Druckunterschied (ΔP2) ausschließlich zum Kalibrieren des Schlauchs (14) verwendet wird.

5. Verfahren nach einem der Ansprüche 1 bis 4, wobei der röhrenförmige Körper ein Harz umfasst, das mindestens ein Treibmittel umfasst, um ein Aufquellen des röhrenförmigen Körpers entweder im geschmolzenen Zustand oder nach dem Extrudieren zu erstellen.

6. Verfahren nach einem der Ansprüche 1 bis 5, wobei das Etikett (17) zwei Enden (18, 18') aufweist, die Ende an Ende angeordnet werden oder sich überdecken oder durch einen Abstand (25) getrennt werden, wobei der Abstand durch das Harz gefüllt wird, das den röhrenförmigen Körper (13) bildet.

7. Verfahren nach einem der vorhergehenden Ansprüche, wobei eine Erhöhung der Dicke des röhrenförmigen Körpers an der Stelle der Verbindungsstellen der Enden der Folie erstellt wird.

8. Verfahren nach einem der Ansprüche 1 bis 6, wobei ein Verstärkungsband hinzugefügt wird, das die Enden der Dekorfolie verbindet.

9. Verfahren nach einem der Ansprüche 1 bis 8, wobei das Etikett in der Wand des Schlauchs eingesperrt wird, indem ein zweiter röhrenförmiger Körper extrudiert wird und indem er im geschmolzenen Zustand auf die Außenfläche des Etiketts aufgebracht wird.

10. Verfahren nach einem der vorhergehenden Ansprüche, wobei der röhrenförmige Körper eine einschichtige oder mehrschichtige Struktur aufweist.

11. Verfahren nach einem der vorhergehenden Ansprüche, wobei das Etikett eine einschichtige oder mehrschichtige Struktur aufweist.

12. Verfahren nach dem vorhergehenden Anspruch, wobei die mehrschichtige Struktur Schichten aus Polyethylen, Polypropylen, Polyethylenterephthalat, Polyamid, Ethylenvinylalkohol, Papier, Aluminium, Metallisierungs- oder Siliziumoxidschichten und Klebeschichten umfasst.

13. Verfahren nach einem der vorhergehenden Ansprüche, wobei das Etikett gedruckt wird.

14. Extrudierungs-Etikettierungsvorrichtung, umfassend:
a) eine Vorrichtung zum Bilden eines ganz oder teilweise röhrenförmigen Etiketts (17) aus einer Folie (12),
b) eine Vorrichtung zum Extrudieren, umfassend eine Extrusionstülle (27) zum Bilden eines röhrenförmigen Körpers (13) auf der Seite der konkaven Fläche des Etiketts (17),
c) ein Kalibrierungselement (22);
wobei die Extrusionstülle (27) im Inneren des Kalibrierungselements (22) angeordnet ist.

15. Vorrichtung nach Anspruch 14, umfassend Mittel zum Bilden eines ersten Druckunterschieds (ΔP1) zwischen dem Inneren und dem Äußeren des röhrenförmigen Körpers (13).

16. Vorrichtung nach Anspruch 15, wobei der erste Druckunterschied (ΔP1) durch eine Druckgaszufuhr, die im Inneren des röhrenförmigen Körpers (13) angeordnet ist, gebildet wird.

17. Vorrichtung nach Anspruch 15 oder 16, umfassend Mittel zum Bilden eines zweiten Druckunterschieds (ΔP2) zwischen dem Inneren und dem Äußeren des Schlauchs (14).

18. Extrudierter und etikettierter Verpackungsschlauch, der nach dem Verfahren nach einem der Ansprüche 1 bis 13 erhalten ist, **dadurch gekennzeichnet, dass** die Folie (12) in die Wand des röhrenförmigen Körpers (13) geschweißt oder eingebettet ist.

19. Verpackungsschlauch nach Anspruch 18, wobei der röhrenförmige Körper ein Harz umfasst, das mindestens ein Treibmittel umfasst, um ein Aufquellen des röhrenförmigen Körpers entweder im geschmolzenen Zustand oder nach dem Extrudieren zu erstellen.

20. Verpackungsschlauch nach einem der Ansprüche 18 oder 19, wobei das Etikett (17) zwei Enden (18, 18') aufweist, die Ende an Ende angeordnet sind oder sich überdecken oder durch einen Abstand (25) getrennt sind, wobei der Abstand durch das Harz gefüllt ist, das den röhrenförmigen Körper (13) bildet.

21. Verpackungsschlauch nach einem der Ansprüche 18 bis 20, umfassend eine Erhöhung der Dicke des röhrenförmigen Körpers an der Stelle der Verbindungsstellen der Enden der Folie.

22. Verpackungsschlauch nach einem der Ansprüche 18 bis 21, umfassend ein Verstärkungsband, das die Enden der Dekorfolie verbindet.

23. Verpackungsschlauch nach einem der Ansprüche 18 bis 22, wobei das Etikett zwischen zwei Wänden des Schlauchs eingesperrt ist.

24. Verpackungsschlauch nach einem der Ansprüche 18 bis 23, wobei der röhrenförmige Körper aus einer einschichtigen oder mehrschichtigen Struktur gebildet ist.

25. Verpackungsschlauch nach einem der Ansprüche 18 bis 24, wobei das Etikett eine einschichtige oder mehrschichtige Struktur aufweist.

26. Schlauch nach dem vorhergehenden Anspruch, wobei die mehrschichtige Struktur Schichten aus Polyethylen, Polypropylen, Polyethylenterephthalat, Polyamid, Ethylenvinylalkohol, Papier, Aluminium, Metallisierungs- oder Siliziumoxidschichten und Klebeschichten umfasst.

27. Schlauch nach einem der vorhergehenden Ansprüche 18 bis 26, wobei das Etikett gedruckt ist.

## Claims

1. Method for extruding and labeling a packaging tube (14) comprising the following successive steps performed on an extrusion/labeling line
a) formation of a partially or completely tubular label (17) from a film (12),
b) placement of the label (17) into a calibration element (22),
c) extrusion of a tubular body (13) on the side of the concave face of the label (17),
d) bringing the outer face of the tubular body (13) into contact with the concave face of the label (17),
step (c) being performed in the calibration element (22) .

2. Method according to Claim 1, **characterized in that** step (d) is performed using a first pressure difference (ΔP1) created between the inside and the outside of the tubular body (13).

3. Method according to Claim 1 or 2, **characterized in that** a second pressure difference (ΔP2) is created between the inside and the outside of the tube (14).

4. Method according to Claim 3, **characterized in that** the second pressure difference (ΔP2) is used exclusively to calibrate the tube (14).

5. Method according to one of Claims 1 to 4, in which the tubular body comprises a resin comprising at least one blowing agent to cause the tubular body to inflate either in the molten state or after extrusion.

6. Method according to one of Claims 1 to 5, in which the label (17) comprises two ends (18, 18') which are arranged end to end or overlap or are spaced apart by a space (25), said space being filled with the resin that forms the tubular body (13).

7. Method according to one of the preceding claims, in which an increase in the thickness of the tubular body is created at the joining point of the ends of the film.

8. Method according to one of the preceding Claims 1 to 6, in which a reinforcing strip is added that joins the ends of the decorative film.

9. Method according to one of Claims 1 to 8, in which the label is enclosed within the wall of the tube by extruding a second tubular body and applying it in the molten state to the external face of the label.

10. Method according to one of the preceding claims, in which the tubular body has a monolayer or a multilayer structure.

11. Method according to one of the preceding claims, in which the label has a monolayer or multilayer structure.

12. Method according to the preceding claim, in which the multilayer structure comprises polyethylene, polypropylene, polyethylene terephthalate, polyamide, ethylene vinyl alcohol, paper, aluminum, metallization or silicon oxide layers, and adhesive layers.

13. Method according to one of the preceding claims, in which the label is printed.

14. Extrusion/labeling device including:
a) a device for forming a partially or completely tubular label (17) from a film (12),
b) an extrusion device comprising an extrusion nozzle (27) for forming a tubular body (13) on the side of the concave face of the label (17),
c) a calibration element (22),
the extrusion nozzle (27) being arranged inside the calibration element (22).

15. Device according to Claim 14, comprising means for creating a first pressure difference (ΔP1) between the inside and the outside of the tubular body (13).

16. Device according to Claim 15, **characterized in that** the first pressure difference (ΔP1) is created using a pressurized gas feed arranged inside the tubular body (13) .

17. Device according to Claim 15 or 16, comprising means for creating a second pressure difference (ΔP2) between the inside and the outside of the tube (14).

18. Extruded and labeled packaging tube obtained according to the method in any one of Claims 1 to 13, **characterized in that** the film (12) is welded or embedded in the wall of the tubular body (13).

19. Packaging tube according to Claim 18, in which the tubular body comprises a resin comprising at least one blowing agent to cause the tubular body to inflate either in the molten state or after extrusion.

20. Packaging tube according to Claim 18 or 19, in which the label (17) comprises two ends (18, 18') which are arranged end to end or overlap or are spaced apart by a space (25), said space being filled with the resin that forms the tubular body (13).

21. Packaging tube according to one of Claims 18 to 20, comprising an increase in the thickness of the tubular body at the joining point of the ends of the film.

22. Packaging tube according to one of Claims 18 to 21, comprising a reinforcing strip joining the ends of the decorative film.

23. Packaging tube according to one of Claims 18 to 22, in which the label is enclosed between two walls of the tube.

24. Packaging tube according to one of Claims 18 to 23, in which the tubular body is formed of a monolayer or a multilayer structure.

25. Packaging tube according to one of Claims 18 to 24, in which the label has a monolayer or multilayer structure.

26. Tube according to the preceding claim, in which the multilayer structure comprises polyethylene, polypropylene, polyethylene terephthalate, polyamide, ethylene vinyl alcohol, paper, aluminum, metallization or silicon oxide layers, and adhesive layers.

27. Tube according to one of the preceding Claims 18 to 26, in which the label is printed.
